# EUROPÄISCHE PATENTANMELDUNG

(11) **EP 0 662 333 A2**
(43) Veröffentlichungstag der Anmeldung: **12.07.1995**
(21) Anmeldenummer: 94119568.7
(22) Anmeldetag: 10.12.1994
(51) Int. Cl.: F25J 3/06, B01D 53/00, B01D 5/00, B01D 8/00

(54) **Verfahren zur Abscheidung von dampfförmigen Inhaltsstoffen aus vorzugsweise hochbeladener Luft bzw. technischen Gasen**

(30) Priorität: 11.01.1994 DE 4400456
(71) Anmelder: IFM - Ingenieurbüro Dr. Hans Förster, D-39108 Magdeburg (DE)
(72) Erfinder: Förster, Dr. Hans, D-39110 Magdeburg (DE); Leser, Wolfgang, D-21266 Jesteburg/Lüllau (DE)
(74) Vertreter: Leinung, Günter

(57) **Zusammenfassung**

Luft- und Gasreinigung, dampfförmige Inhaltsstoffe, kombinierte Kälteanwendung, Kaltdampf- und Kaltluft-Kälteerzeugung, Direkt-Kondensation, Kaltwäsche, Luftentspannung, Kondensate der Inhaltsstoffe als Kälteträger.

Verfahren zur Abscheidung von dampfförmigen Inhaltsstoffen aus vorzugsweise hochbeladener Luft bzw. technischen Gasen.

Das Verfahren ist anwendbar zur gleichzeitigen Abscheidung von organischen und anorganischen dampfförmigen Inhaltsstoffen aus Luft bzw. technischen Gasen, z.B. zur Rückgewinnung von Benzin aus Verdrängungsluft von Tanklagern, Lösungsmitteln aus Luft usw. und zur Gewinnung extrem getrockneter Luft bzw. technischer Gase.

Aufgabe der Erfindung ist es, ein Verfahren zu entwickeln, das eine Rückgewinnung aller Wertstoffe (organische Kondensate und aufbereitete, getrocknete Luft oder Gas) aus hochbeladener Luft ermöglicht, wobei die europäischen Normen für die Reinhaltung der Luft im Dauerbetrieb bei geringem Energie- und Investitionsaufwand erfüllt werden.

Die Aufgabe wird durch Direktkondensation in einer Kaltwäsche gelöst, wobei ein umlaufender Strom der gewonnenen Kondensate als Kälteträger in der Kaltwäsche (2) verwendet wird, der im unteren Bereich durch eine Kaltdampf-Kälteanlage (4) und im oberen Bereich durch eine Kaltluft-Kälteanlage unterkühlt wird, wobei der Kälteinhalt der Reinluft regenerativ zur Kühlung des Kälteträgers der Obersäule der Kaltwäsche (2) und zur Vorkühlung der verdichteten Luft der Kaltluft-Kälteanlage verwendet wird.

## Beschreibung

Die Erfindung betrifft ein Verfahren zur Abtrennung dampfförmiger Inhaltsstoffe aus vorzugsweise hochbeladener Luft bzw. technischen Gasen und deren Rückgewinnung als Wertstoff. Dampfförmige Bestandteile können sowohl organische Verbindungen (z.B. Benzin oder Lösungsmittel wie Aceton) als auch anorganische Substanzen (z.B. Wasserdampf) sein. Mit diesem Verfahren ist es auch möglich, Luft und technische Gase als getrockneten und für spezielle Anwendungen aufbereiteten Wertstoff zu gewinnen.

Es ist bekannt, daß die bisher verwendeten Verfahren zur Benzinabscheidung aus Luft die technischen Normen zur Reinhaltung der Luft nur ungenügend bzw. mit zu hohem Aufwand erfüllen. Neben der hohen Kosten und Investitionsaufwände der bekannten Verfahren werden in vielen Fällen sogar Umweltprobleme, wie z.B. Abwasserprobleme geschaffen (Rüttinger J.: Erdöl, Erdgas, Kohle Jahrgang 107 (1991), H. 11, S.479).

Es sind bereits folgende allgemein geläufige Verfahren bekannt:
- Kaltwäsche zwischen -30°C und -80°C mit nachgeschaltetem Gasmotor oder Aktivkohle-Adsorption oder Membrantechnik oder katalytischer Oxidation;
- Druckkondensation mit einer Tieftemperatur- und einer Tiefsttemperaturstufe durch Anwendung von flüssigem Stickstoff oder mit Membrantechnik oder katalytischer Oxidation.

Durch die Nachschaltung eines Gasmotors wird nicht nur der Restgehalt an Benzin in der Luft vernichtet, sondern auch das vorher abgeschiedene Benzin für den Betrieb des Gasmotors verbraucht. Die Inhaltsstoffe der Luft oder des Gases, die bevorzugt vollständig zurückgewonnen werden sollen, werden damit aufgezehrt und stehen als Wertstoff nicht mehr zur Verfügung.
In gleicher Weise wird durch eine katalytische Oxidation der in der Luft enthaltene Wertstoff energetisch umgesetzt und ist damit verloren.

Bei allen Anlagen mit Aktivkohle-Adsorption besteht das Problem der Desorption der Adsorber, wobei hier Wertstoffverluste und andere bereits erwähnte unerwünschte Sekundärfolgen eintreten.

Anlagen für die Kondensation der dampfförmigen Inhaltsstoffe ermöglichen eine vollständige Rückgewinnung der Begleitstoffe und sind daher zu bevorzugen.

Bekannt sind Verfahren, mit denen durch Anwendung von Kompressionskältekaskaden in mehreren Stufen und mit mehreren Kältemitteln sowie durch Einsatz von Flüssigstickstoff für die Stufe der Tiefsttemperatur-Kondensation die Abtrennung der Begleitstoffe (Dämpfe) durch Kondensation gelingt. Diese Verfahren sind aber energetisch und aus der Sicht der Betriebs- und Investitionskosten keine vertretbare Lösung. Ein großes Problem dieses Verfahrens ist die Vereisung der Wärmeübertragungsflächen durch den Wasserdampfgehalt der Luft oder der Gase, wenn man die Wärmeübertragung unter 0°C über feste Wände durchführt (indirekte Wärmeübertragung). Mit der Vereisung dieser Wärmeübertragungsflächen verschlechtert sich der Wärmedurchgang und erfordert doppelte Ausführung der Wärmeübertrager mit Umschaltung zum Abtauen (diskontinuierliche Fahrweise). Außerdem lassen die konventionellen Kaltdampf-Kälteanlagen nur ein mäßig tiefes Temperaturniveau zu, so daß ohne erheblichen Verbrauch von flüssigem Stickstoff am kalten Ende die anspruchsvollen Forderungen neuer Regelwerke zur Reinhaltung der Luft nicht erfüllt werden oder eine andere Feinreinigungsstufe nachgeschaltet werden muß.
Auch die Druckkondensation und die Membrantechnik erfüllen nicht oder bisher nicht die in sie gesetzten Hoffnungen bezüglich der Einhaltung der erforderlichen Reinheit der Luft bei vertretbarem Kostenaufwand.
Für die wirtschaftliche Erzielung tiefer Temperaturen wurde ein Luftkälte-Prozeß angegeben ¹⁾, mit dem der Joule-Prozeß vermieden und der sogenannte Glaser-Nesselmann-Prozeß realisierbar wird. Die Anwendung dieses Verfahrens zur Abtrennung organischer Begleitstoffe ist in der deutschen Patentanmeldung (Akt.-Z. P 4303670.8) beschrieben. Dabei wird die beladene Luft oder das beladene technische Gas von einem Schraubenverdichter mit Wassereinspritzung angesaugt, praktisch isotherm verdichtet, durch Direktwärmetausch mit Wasser und anschließend durch Direktwärmetausch mit einem flüssigen, nicht gefrierenden und nicht stockenden Kälteträger im Gegenstrom in einer Stoffaustauschkolonne vorgekühlt und in einer Entspannungsturbine entspannt, wobei nach der Entspannung Temperaturen um -160°C mühelos erreichbar sind.
Nachteile dieses Verfahrens ergeben sich bei hoher Beladung der Luft oder des zu reinigenden Gases durch die Mitverdichtung der Dämpfe und durch die Rückführung gereinigter Luft (oder des technischen Gases) zur Aufbringung des Kältebedarfes für die Kondensation der Dämpfe bei tiefen Temperaturen (höherer Energiebedarf).
1) Förster, H. u.a.: Einsatzmöglichkeiten einer Kaltluft-Kälteanlage .......... DKV-Tagungsbericht 19.Jg.(1992), Bremen, Bd. III S. 159

Aufgabe der Erfindung ist es, ein Verfahren zu entwickeln, das eine Rückgewinnung aller Wertstoffe (organische Kondensate und aufbereitete, getrocknete Luft oder Gas) aus hochbeladenen Luft- oder Gasströmen ermöglicht, wobei die europäischen Normen für die Reinhaltung der Luft im Dauerbetrieb bei geringem Energie- und Investitionsaufwand erfüllt werden.

Erfindungsgemäß wird die Aufgabe entsprechend den Merkmalen des Anspruches 1 gelöst. Zur Ausgestaltung der Erfindung dienen die in den Ansprüchen 2 bis 7 aufgeführten Merkmale.
Das vorgeschlagene Verfahren gestattet eine hervorragende Anpassung der Kälteleistung an den Kältebedarf im gesamten Temperaturbereich der Kondensation in der Kaltwäsche 2. Durch Gegenstromführung von flüssigem Kälteträger einschließlich der ausgeschiedenen Kondensate und der Gasphase wird auch die fühlbare Wärme der flüssigen Anteile ideal genutzt und Eiskristalle nach unten im Strom der nicht gefrierenden flüssigen Kälteträger abtransportiert und in der unteren Warmzone geschmolzen, wenn Wasser im organischen Kondensat nicht lösbar ist. Durch die Abscheidung der Inhaltsstoffe der Gasphase in einer Waschsäule werden die Vorteile eines einstufigen Prozesses beibehalten, d.h. es müssen nicht mehrfach Kühl- und Wärmetauschvorgänge durchgeführt werden.

Wesentlich ist der Vorteil, daß die Kaiteerzeugung in der Kaltluft-Kälteanlage 24 mit Reinluft bzw. Reingas arbeitet, die keinen nennenswerten Anteil an organischen Inhaltsstoffen besitzen und frei sind von Wasserdampf. Auch die niedrige Ansaugtemperatur der Reinluft bzw. des Reingases durch den Verdichter sichert einen geringen Energieaufwand bei der Verdichtung.
Das Verfahren wird an Hand von sechs schematischen Zeichnungen und an Hand typischer Parameter beschrieben und charakterisiert.

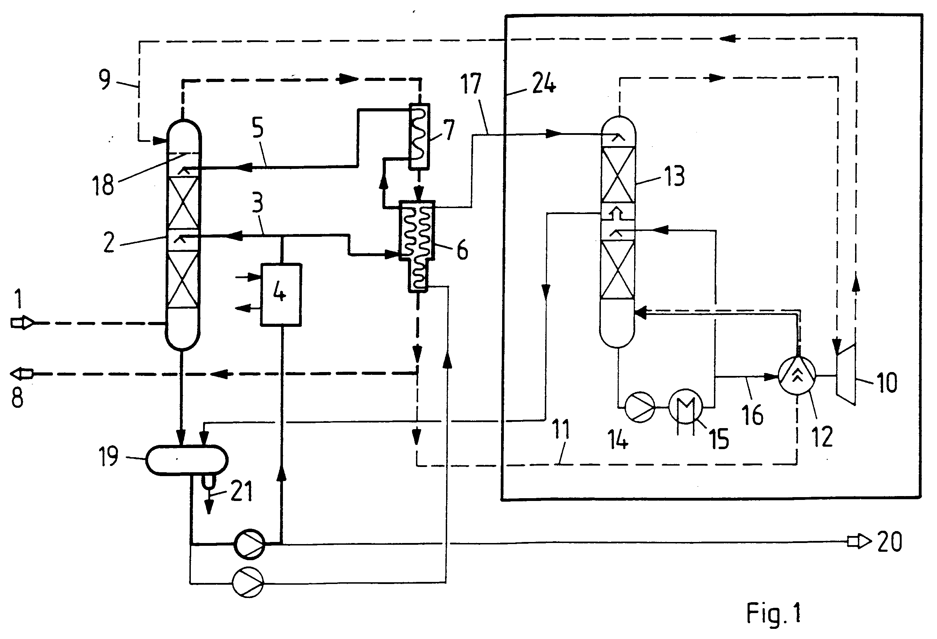

- Fig. 1: zeigt die technologische Verknüpfung der erforderlichen Komponenten zur Durchführung des erfindungsgemäßen Verfahrens.
- Fig. 2: zeigt das Verfahren mit indirektem Wärmetausch für die Vorkühlung der verdichteten Luft.
- Fig. 3: zeigt das Verfahren mit Kälteträgerspeichern.
- Fig. 4 bis Fig. 6: zeigen Ausgestaltungen des Verfahrens für die Restkältenutzung des Gesamtkälteträgerstromes am warmen Prozeßende mit unterschiedlichen Drücken in den Wärmeübertragern.

Luft 1 oder ein technisches Gas 1 tritt beladen mit Dämpfen in die Kaltwäsche 2 unten ein und wird im Aufwärtsstrom durch stark unterkühlte Kondensate der Inhaltsstoffe als Kälteträgerströme 3 und 5 im Gegenstrom direkt gekühlt und dabei die in der Luft bzw. im technischen Gas enthaltenen Dämpfe kondensiert. Die Kondensate fallen im Sumpf der Kaltwäsche 2 an. Bei wasserunlöslichen organischen Kondensaten ist ein Abscheider 19 mit Wasserabzug 21 sinnvoll.. Der Überschuß an Kondensat wird aus dem Abscheider 19 bzw. der Kaltwäsche 2 abgezogen und als flüssiger Wertstoff 20 gewonnen. Ein Teil der Kondensate wird als prozeßinterner Kälteträger genutzt. Die Kühlung des Kälteträgerstromes 3 für die Untersäule der Kaltwäsche 2 erfolgt in einer konventionellen Kaltdampf-Kälteanlage 4, die Kühlung des Kälteträgerstromes 5 für die Obersäule der Kaltwäsche 2 erfolgt durch Kaltluft einer Kaltluft-Kälteanlage 24 und durch regenerative Nutzung des Kälte-Inhalts der abströmenden Kaltluft in Wärmeübertragern 6 und 7. Hierbei sind vorteilhafterweise die Wärmeübertrager 6 und 7 als Gegenstrom-Wärmeübertrager bzw. Kreuzgegenstrom-Wärmeübertrager ausgebildet.
Am Kopf der Kaltwäsche 2 erfolgt die Kaltabscheidung von Restkondensaten des Kälteträgers der Kaltluft-Kälteanlage 24, die über einen Stoffaustauschboden 18 in den Hauptteil der Kaltwäsche 2 abfließen. Am Kopf der Kaltwäsche 2 vereinigt sich der gereinigte durchgehende Reinluftstrom 8 mit einem Kaltluftstrom 9 der Kaltluft-Kälteanlage 24 zu einem vereinigten Kaltluftstrom, der in den Wärmeübertragem 7 und 6 Wärme aufnimmt und die Kälteträgerströme 5 und 17 abkühlt.
Danach wird der Reinluftstrom 8 abgezogen und der kursierende Reinluftstrom 11 vom Verdichter 12 mit Wassereinspritzung erneut angesaugt und verdichtet.

Der Kälteträgerstrom 17 nutzt regenerativ Kälte der Kaltluft im Wärmeübertrager 6, wird oberhalb der Obersäule der Kaltwäsche 13 der Kaltluft-Kälteanlage 24 eingespeist und kühlt hier die umlaufende, komprimierte Luft der Kaltluft-Kälteanlage 24, die vorher im Verdichter 12 isotherm komprimiert und in der Untersäule der Kaltwäsche 13 durch umlaufendes Kühlwasser vorgekühlt wurde.
Nach der Entspannung der vorgekühlten Kaltluft in der Entspannungsturbine 10 fallen bei niedrigen Temperaturen Reste des flüssigen Kälteträgers an und werden von der Kaltluft im Kopfteil der Kaltwäsche 2 abgeschieden, wobei die anfallende Flüssigkeit über einen Stoffaustauschboden 18 in den Hauptteil der Kaltwäsche 2 gelangt.

Das im Sumpf der Kaltwäsche 13 der Kaltluft-Kälteanlage 24 anfallende Kühlwasser steht nach Kreislaufführung über die Pumpe 14 und nach Rückkühlung im Kühler 15 erneut für die Wassereinspritzung im Verdichter 12 für den Einspritz-Wasserstrom 16 und zur Direktkühlung In der Untersäule der Kaltwäsche 13 zur Verfügung.

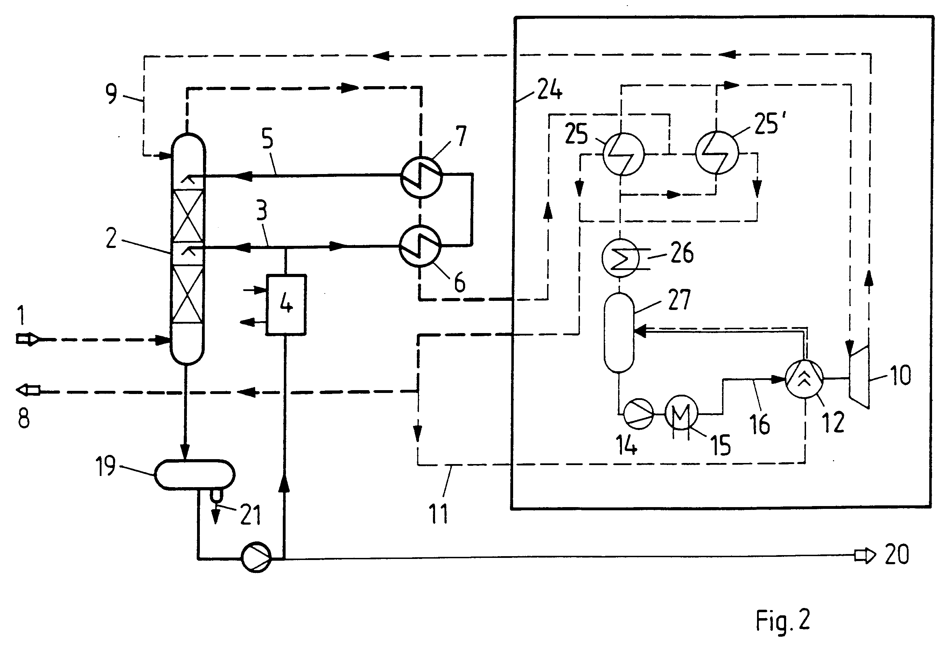

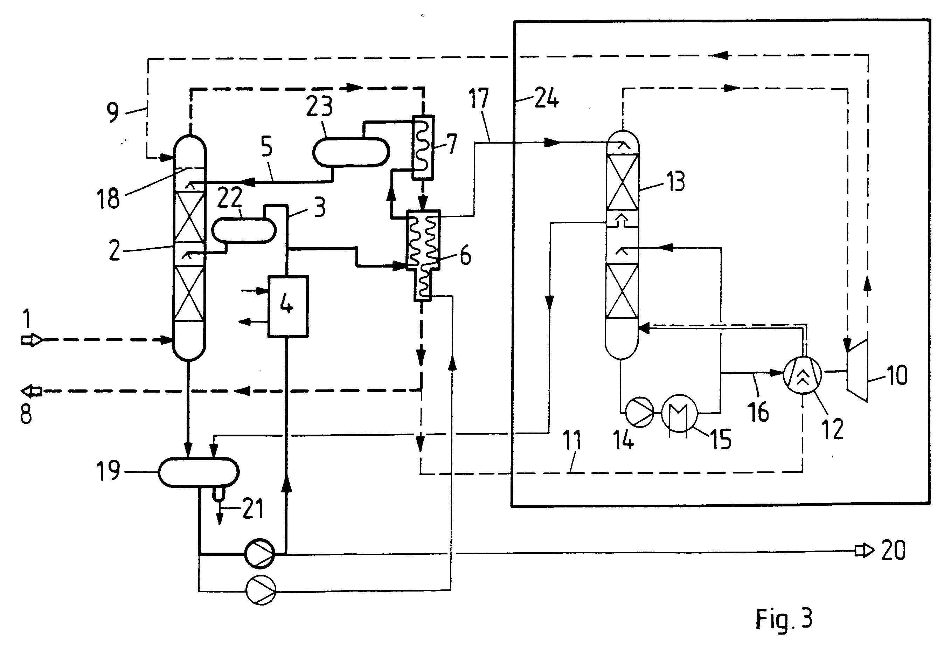

Fig. 2 zeigt eine Realisierung des Verfahrens mit indirektem Wärmetausch für die Vorkühlung der verdichteten Luft. Hier ist dargestellt, daß die regenerative Nutzung des Kältevorrates der Reinluft nach dem Wärmeübertrager 6 für die Vorkühlung der verdichteten Luft auf der Druckseite des Verdichters 12 der Kaltluft-Kälteanlage 24 auch durch indirekten Wärmetausch über umschaltbare Wärmeübertrager 25 und 25' erfolgen kann, wobei auch die Direktkühlung mit Wasser der Untersäule der Kaltwäsche 13 durch einen indirekten Kühler 26 ersetzt wird und die Wasserabscheidung über einen Abscheider 27 vorgenommen wird.
In einer besonderen Ausgestaltung des Verfahrens nach Fig. 3 sind für die Kalteträgerströme 3 und 5 der Kaltwäsche zwei Kälteträgerspeicher 22 und 23 vorgesehen, aus denen bedarfsgemäß schwankende Kälteträgermengen entnommen werden.

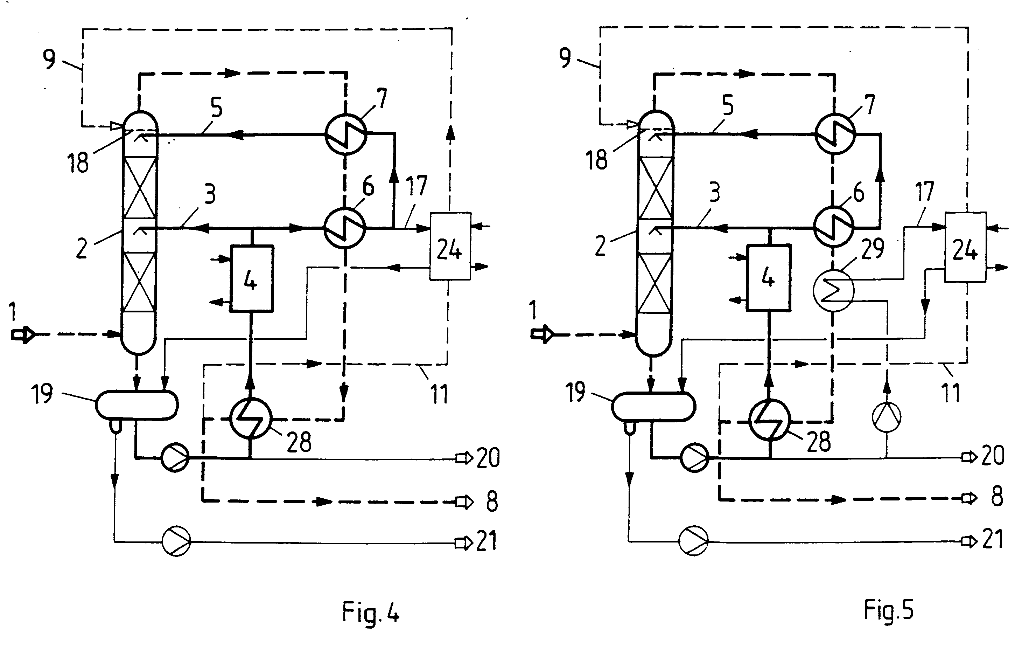

In Fig. 4 wird ein weiterer Wärmeübertrager 28 vorgesehen, über den der gesamte kursierende Kälteträgerstrom am warmen Ende des Prozesses geleitet wird, wobei dieser Wärmeübertrager 28 Restkälte aus der Reinluft nutzt.
In Fig. 5 werden vier in Reihe geschaltete Wärmeübertrager 6, 7, 28 und 29 verwendet, von denen nur der Wärmeübertrager 29 mit erhöhter Druckdifferenz arbeitet. Bei dieser Schaltung wird die Restkälte exergetisch besonders vorteilhaft zur Vorkühlung des Kälteträgerstroms 17 für die Kaltluft-Kälteanlege 24 genutzt.

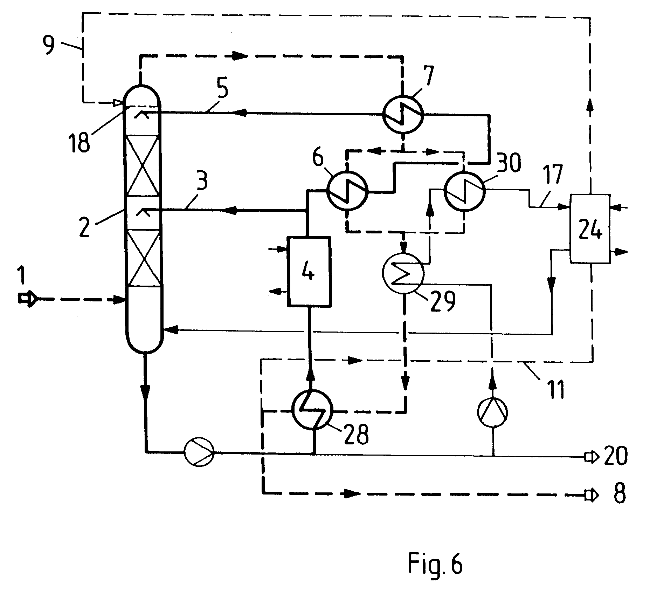

In Fig. 6 ist ein weiterer Wärmeübertrager 30 in Parallelschaltung zum Wärmeübertrager 6 vorgesehen, um anspruchsvoll niedrige Temperaturen zur Vorkühlung für den Kälteträgerstrom 17 zu erreichen.

Durch die unterschiedlichen Schaltungen der Wärmeübertrager kann sowohl der Wärmeaustausch als auch die Dichtheit der Anlage optimiert werden. Für wasserlösliche organische Kondensate wie Aceton und Methanol kann der Abscheider 19 entfallen.

Die Parameter bzw. Parameterbereiche des Verfahrens sollen für die Rückgewinnung von organischen Dämpfen aus Luftströmen genannt werden. Je nach verfügbarem Wasser ist die Temperatur

| | |
|---|---|
| der Luft am Eintritt in die Obersäule der Kaltwäsche 13 | 15 bis 30°C |
| des Waschmittels am Austritt aus der Obersäule der Kaltwäsche 13 | 12 bis 27°C |

Die Parameter im kalten Teil des Verfahrens sind stark abhängig von der Siede- und Schmelztemperatur der Inhaltsstoffe:

| | Inhaltsstoff | |
|---|---|---|
| | Leichtbenzin | Aceton |
| typische Austrittstemperatur der Kaltluft am Kopf der Kaltwäsche 13 | -60 bis -100°C | -10 bis -25°C |
| typische Austrittstemperatur der Kaltluft aus der Entspannungsmaschine 10 | -140 bis -160°C | -95 bis -100°C |
| Drücke in der Kaltwäsche 13 | 4 bis 8 bar | 2,5 bis 3 bar |
| Druck in der Kaltwäsche 2 | 1,2 bis 1,8 bar | |

### Aufstellung der verwendeten Bezugszeichen

- 1: Luft / technisches Gas
- 2: Kaltwäsche
- 3: Kälteträgerstrom
- 4: Kaltdampf-Kälteanlage
- 5: Kälteträger
- 6: Wärmeübertrager
- 7: Wärmeübertrager
- 8: Reinluftstrom
- 9: Kaltluftstrom
- 10: Entspannungsturbine
- 11: kursierender Reinluftstrom
- 12: Verdichter
- 13: Kaltwäsche
- 14: Pumpe
- 15: Kühler
- 16: Einspritz-Wasserstrom
- 17: Kälteträgerstrom
- 18: Stoffaustauschboden
- 19: Abscheider
- 20: flüssiger Wertstoff
- 21: Wasserabzug
- 22: Kälteträgerspeicher
- 23: Kälteträgerspeicher
- 24: Kaltluft-Kälteanlage
- 25, 25': Wärmeübertrager
- 26: Kühler
- 27: Abscheider
- 28: Wärmeübertrager
- 29: Wärmeübertrager
- 30: Wärmeübertrager

## Patentansprüche

1. Verfahren zur Abscheidung von dampfförmigen Inhaltsstoffen aus vorzugsweise hochbeladener Luft bzw. technischen Gasen durch Kondensation und deren getrennte Gewinnung und Aufbereitung als Wertstoff, **gekennzeichnet dadurch,** daß kondensierte Inhaltsstoffe aus einem, dampfförmige Inhaltsstoffe aufweisenden Luft- oder Gasstrom (1) als umlaufende Kälteträgerströme verwendet werden, wobei ein Kälteträgerstrom (3) für die Untersäule einer Kaltwäsche (2) durch eine an sich bekannte Kaltdampf-Kälteanlage (4) abgekühlt wird, ein zweiter Kalteträgerstrom (5) für die Obersäule der Kaltwäsche (2) sowohl durch Kaltluft (9) aus einer Kaltluft-Kälteanlage (24) als auch durch den Kälteinhalt eines durchgehenden Luftstromes (8) abgekühlt wird und ein dritter Kälteträgerstrom (17), der von der Kaltluft aus der Kaltwäsche (2) unterkühlt wird, die Vorkühlung der verdichteten Luft in der Obersäule einer Kaltwäsche (13) der Kaltluft-Kälteanlage (24) übernimmt.

2. Verfahren nach Anspruch 1, **gekennzeichnet dadurch**, daß die beladene Luft (1) bzw. das technische Gas (1) im Aufwärtsstrom in einer Kaltwäsche (2) auf eine anspruchsvoll niedrige Temperatur abgekühlt wird, in dem eine Teilmenge des im Abscheider (19) anfallenden Kondensates als flüssiger Kälteträgerstrom (3) in der Kaltdampf-Kälteanlage (4) unterkühlt und als Kälteträgerstrom (3) oberhalb der Untersäule der Kaltwäsche (2) eingespeist wird und ein zweiter Teilstrom nach seiner Vorkühlung in Wärmeübertragem (6) und (7) als Kälteträgerstrom (5) oberhalb der Obersäule der Kaltwäsche (2) eingespeist wird, wobei die Kühlung des Kälteträgerstromes (5) sowohl durch den Kaltluftstrom (9) der Kaltluft-Kälteanlage (24) als auch durch regenerative Nutzung des Kälteinhalts der gereinigten Luft bzw. des technischen Gases erfolgt, bei gleichzeitiger Vorwärmung der Reinluft bzw. des Reingases auf Umgebungstemperatur, wonach der durchgehende Reinluftstrom (8) abgegeben und ein weiterer kursierender Strom (11) vom Verdichter (12) der Kaltluft-Kälteanlage (24) angesaugt, unter Wassereinspritzung isotherm verdichtet und in der Untersäule der Kaltwäsche (13) nachgekühlt wird, während das umlaufende Kühlwasser im Sumpf der Kaltwäsche (13) anfällt, durch die Pumpe (14) im Kreislauf geführt, im Kühler (15) zurückgekühlt, zu einer Teilmenge (16) in den Verdichter (12) eingespritzt und ein weiterer Teilstrom oberhalb der Untersäule in die Kaltwäsche (13) eingespeist wird und die weitere Vorkühlung der verdichteten Luft bzw. des technischen Gases in der Obersäule der Kaltwäsche (13) durch einen dritten Teilstrom (17) des Kondensates der Inhaltsstoffe erfolgt, der durch regenerative Nutzung des Kältevorrates der Reinluft im Wärmeübertrager (6) unterkühlt vorliegt, wonach die Entspannung der komprimierten Luft bzw. des technischen Gases in der Entspannungsturbine (10) auf tiefe Temperaturen erfolgt und dabei weitere Flüssig-Anteile ausfallen, die am Kopf der Kaltwäsche (2) von der Gasphase abgetrennt werden und über einen Stoffaustauschboden (18) im Gegenstrom zur Luft / zum technischen Gas in der Kaltwäsche (2) Wärme aufnehmen.

3. Verfahren nach Anspruch 1, **gekennzeichnet dadurch**, daß die Vorkühlung der komprimierten Luft der Kaltluft-Kälteanlage (24) durch indirekten Wärmetausch mit der Kaltluft nach den Kreuzgegenstrom-Wärneübertragern (7) und (6) in umschaltbaren Wärmeübertragem (25) bzw. (25') erfolgt, und die Vorkühlung der verdichteten Luft nach dem Verdichter (12) und Abscheider (27) durch einen Kühler (26) übernommen wird.

4. Verfahren nach Anspruch 1 bis 3, **gekennzeichnet dadurch**, daß die Kälteträgerströme (3, 5) in Speicherbehältern (22) bzw. (23) zwischengelagert und bedarfsgerecht entnommen werden.

5. Verfahren nach Anspruch 1 und 2, **gekennzeichnet dadurch**, daß der gesamte kursierende Kälteträgerstrom am warmen Ende des Prozesses über einen weiteren Wärmeübertrager (28) geleitet wird und Restkälte aus der Reinluft aufnimmt.

6. Verfahren nach Anspruch 1, 2 und 5, **gekennzeichnet dadurch**, daß vom gesamten kursierenden Kälteträgerstrom nur der Teilstrom, der zur Vorkühlung in der Kaltluft-Kälteanlage (24) erforderlich ist, auf ein höheres Druckniveau gebracht und in einem Wärmeübertrager (29) abgekühlt wird.

7. Verfahren nach Anspruch 6, **gekennzeichnet dadurch**, daß der im Wärmeübertrager (29) abgekühlte Teilstrom über einen zusätzlichen Wärmeübertrager (30), der parallel zum Wärmeübertrager (6) angeordnet ist, weiter abgekühlt wird.
